# EUROPÄISCHE PATENTANMELDUNG

(11) **EP 2 818 383 A1**
(43) Veröffentlichungstag der Anmeldung: **31.12.2014**
(21) Anmeldenummer: 13173497.2
(22) Anmeldetag: 25.06.2013
(51) Int. Cl.: B62B 13/08, B62B 13/18, B62B 17/08

(54) **Schlitten zum Rodeln auf einer Unterlage**

(71) Anmelder: Jesag AG, 3762 Erlenbach i. S. (CH)
(72) Erfinder: Jutzeler, Andreas, 3762 Erlenbach i. S. (CH)
(74) Vertreter: BOVARD AG

(57) **Zusammenfassung**

Ein Schlitten (1) umfasst einen Rahmen (2) mit mindestens einem vorderen Bügel (3) und einem hinteren Bügel (4), an welchem Kufen (6) befestigt sind. Ferner umfasst der Schlitten Rollen (7), die beim Rodeln auf einer gleitfähigen Unterlage in eine hochgeschwenkte Position bringbar sind und zum Fahren auf einer nicht gleitfähigen Unterlage in eine ausgeschwenkte Position bringbar sind. Ferner ist eine Bremseinrichtung (11) vorgesehen, die mindestens ein Bremselement (12) umfasst, welches über eine Betätigungseinrichtung zum Bremsen des Schlittens gegen die Unterlage ausfahrbar ist. Das Bremselement (12) weist einen ersten Bereich (13) auf, der bei hochgeschwenkten Rollen (7) mit der Unterlage in Kontakt kommt und weist einen zweiten Bereich (14) auf, der bei ausgeschwenkten Rollen (7) mit der Unterlage in Kontakt kommt und jeweils eine Bremswirkung erzeugt. Dadurch wird erreicht, dass die Bremswirkung sowohl auf einer gleitfähigen Unterlage, als auch auf einer nicht gleitfähigen Unterlage in optimaler Weise wirksam ist.

## Beschreibung

Die vorliegende Erfindung bezieht sich auf einen Schlitten zum Rodeln auf einer Unterlage, umfassend einen Rahmen mit mindestens einem vorderen Bügel und einem hinteren Bügel, an welchen Kufen befestigt sind, ein am Rahmen befestigtes Sitzbrett, Rollen, die beim Rodeln auf einer gleitfähigen Unterlage in eine hochgeschwenkte Position bringbar sind und zum Fahren auf einer nicht gleitfähigen Unterlage in eine ausgeschwenkte Position bringbar sind, und eine Bremseinrichtung.

Schlitten mit Kufen, mit welchen auf einer gleitbaren Unterlage, insbesondere Schnee, gerodelt werden kann, sind in vielfältiger Weise bekannt. Die Gleitflächen an den Kufen ermöglichen, dass der Schlitten über die gleitfähige Unterlage gleiten kann.

Derartige Schlitten können auch mit einer Bremseinrichtung ausgestattet werden, die in vielen Fällen so ausgebildet ist, dass über einen um eine Schwenkachse schwenkbaren Schwenkhebel eine Kralle in die gleitbare Unterlage, insbesondere Schnee, gedrückt werden kann. Die Bremsfähigkeit von derartigen Bremseinrichtungen ist vielfach ungenügend.

Es sind auch Schlitten bekannt, bei welchen an den Kufen Rollen angebracht oder anbringbar sind, welche insbesondere dazu dienen, dass beispielsweise ein Schlitten von einem Parkplatz zur Talstation einer Bergbahn gezogen werden kann, welche Parkplätze vielfach vom Schnee geräumt sind oder der Schnee geschmolzen ist. Dadurch kann der Schlitten einfach über diese nicht gleitbare Unterlage gezogen werden, er muss nicht getragen werden, ohne dass die Kufen durch das Gleiten auf einer nicht gleitbaren Unterlage Schaden nehmen.

Derartige mit Rollen ausgestattete Schlitten sind kaum geeignet, dass beispielsweise ein Schlitten, mit welchem man einen mit Schnee bedeckten Schlittelweg runterrodelt, auf Bereichen des Schlittelweges, in welchen der Schnee weggeschmolzen ist und beispielsweise der Asphalt zum Vorschein kommt, durch Ausklappen von Rollen so umgestaltet werden kann, dass auch über diese Asphaltstrecke praktisch im Rodelstil runtergefahren werden kann. Insbesondere wären die vorgängig beschriebenen Bremsen, die bei Schlitten eingesetzt werden, für ein derartiges Runterfahren mit dem Schlitten auf der Asphaltfläche völlig unzureichend.

Die Aufgabe der vorliegenden Erfindung besteht somit darin, eine Bremseinrichtung für einen Schlitten zu gestalten, welche sowohl beim normalen Rodeln auf einer gleitfähigen Unterlage, insbesondere Schnee, als auch beim Runterfahren auf einer nicht gleitfähigen Unterlage mit ausgefahrenen Rollen voll wirksam ist.

Erfindungsgemäss erfolgt die Lösung dieser Aufgabe dadurch, dass die Bremseinrichtung mindestens ein Bremselement umfasst, welches über eine Betätigungseinrichtung zum Bremsen des Schlittens gegen die Unterlage ausfahrbar ist, und dass das Bremselement einen ersten Bereich, der bei hochgeschwenkten Rollen mit der gleitfähigen Unterlage in Kontakt kommt, und einen zweiten Bereich aufweist, der bei ausgeschwenkten Rollen mit der nicht gleitfähigen Unterlage in Kontakt kommt und jeweils eine Bremswirkung erzeugt.

Bei dieser erfindungsgemässen Bremseinrichtung ist der erste Bereich des Bremselementes so ausgestaltet, dass eine optimale Bremswirkung insbesondere bei einer gleitfähigen Unterlage aus Schnee oder Eis erreicht werden kann, während der zweite Bereich des Bremselementes so ausgebildet ist, dass er insbesondere auf einer Unterlage aus Asphalt eine optimale Bremswirkung erzeugt. Dadurch ist gewährleistet, dass bei jeglicher Benutzung des Schlittens, sei dies zum normalen Rodeln auf einer beispielsweise mit Schnee bedeckten Unterlage, sei dies beim Runterfahren auf einer beispielsweise asphaltierten Strecke, die Wirksamkeit der Bremse optimal gegeben ist.

In vorteilhafter Weise ist das Bremselement durch einen ersten Schwenkhebel gebildet, der über eine erste Schwenkachse schwenkbar mit dem Rahmen verbunden ist, wodurch ein einfacher Aufbau erreicht werden kann.

In vorteilhafter Weise ist der eine Endbereich des ersten Schwenkhebels um die erste Schwenkachse schwenkbar angeordnet, und sind der erste Bereich und der zweite Bereich des Bremselementes am schwenkbaren Bereich des ersten Schwenkhebels angeordnet. Dadurch kann der erste Bereich oder der zweite Bereich des Bremselements in einfacher Weise durch unterschiedliche Positionen des ersten Schwenkhebels in Eingriff gebracht werden.

In vorteilhafter Weise ist der erste Bereich des Bremselements in einem mittleren Bereich des schwenkbaren Bereichs des ersten Schwenkhebels angeordnet und umfasst mindestens eine Kralle, die über den ersten Schwenkhebel vorstehend und gegen die Unterlage gerichtet ist. Dadurch kann der Schlitten insbesondere auch auf einer eisigen Unterlage optimal gebremst werden.

Eine weitere vorteilhafte Ausgestaltung der Erfindung besteht darin, dass der zweite Bereich des Bremselements an dem einen Endbereich des ersten Schwenkhebels gegenüberliegenden anderen Endbereich angebracht ist und als Bremsklotz ausgebildet ist, und dass der andere Endbereich bezüglich des einen Endbereichs im mittleren Bereich abgebogen ist. Durch diese Ausgestaltung kommt bei ausgeschwenkten Rollen der Bremsklotz mit der nicht gleitfähigen Unterlage in Kontakt, die Kralle berührt die Unterlage nicht.

In vorteilhafter Weise umfasst die Betätigungseinrichtung für die Bremseinrichtung einen im Bereich der Sitzfläche am Rahmen angebrachten Bedienerhebel, welcher über eine Koppelstange mit dem ersten Schwenkhebel verbunden ist und ist der erste Schwenkhebel über ein Federelement in die aus der Bremsposition zurückgezogene Position bringbar. Durch diese Ausgestaltung der Erfindung lässt sich die Bremseinrichtung durch die den Schlitten benützende Person in optimaler Weise bedienen, durch die Wahl der Hebellängen kann auch der Kraftaufwand gering gehalten werden.

Eine weitere vorteilhafte Ausgestaltung der Erfindung besteht darin, dass der erste Schwenkhebel aus zwei parallelen Schenkeln gebildet ist, die beidseits einer Kufe angeordnet sind, deren andere Endbereiche über das Kufenende vorstehend sind und über den Bremsklotz miteinander verbunden sind. Dies ergibt einen sehr stabilen Aufbau des ersten Schwenkhebels, durch das Anordnen des Bremsklotzes hinter den Kufenenden ist dieser beim Rodeln auf Schnee in optimaler Weise ausserhalb des Gleitbereichs der Kufen untergebracht.

In vorteilhafter Weise ist im Bereich von beiden hinteren Kufen jeweils eine Bremseinrichtung angebracht, wodurch die Bremswirksamkeit erhöht wird.

Eine weitere vorteilhafte Ausgestaltung der Erfindung besteht darin, dass jede Bremseinrichtung separat über jeweils einen Bedienerhebel betätigbar ist, was ermöglicht, die beiden Bremseinrichtungen durch gezielten Einsatz auch zur Unterstützung des Lenkens des Schlittens einzusetzen.

Eine weitere vorteilhafte Ausgestaltung der Erfindung besteht darin, dass an jeder Kufe eine Rolle angebracht ist, welche an jeweils einem zweiten Schwenkhebel drehbar gelagert ist, welcher zweite Schwenkhebel um eine am Rahmen beziehungsweise an der Kufe gehaltene zweite Schwenkachse schwenkbar ist. Durch diese Ausgestaltung wird eine einfache Halterung der Rolle am Schlitten erhalten, zudem sind das Ausschwenken und das Hochschwenken der Rolle in einfacher Weise möglich.

In vorteilhafter Weise sind die eingeschwenkte Position des zweiten Schwenkhebels der Rolle und die ausgeschwenkte Position des zweiten Schwenkhebels der Rolle durch einen Anschlag begrenzt, wodurch das Positionieren der Rollen und die Stabilität des Haltens in dieser Position der Rollen optimal sind.

Eine weitere Aufgabe der Erfindung besteht darin, einen derartigen erfindungsgemässen Schlitten lenkbar zu machen, was erfindungsgemäss dadurch gelöst ist, dass der vordere Bügel mit dem Rahmen über eine Drehachse drehbar verbunden ist.

Dadurch lässt sich der vordere Bügel mit den daran befestigten Kufen um diese Drehachse drehen, wodurch eine Lenkung des Schlittens in einfacher Weise möglich wird.

In vorteilhafter Weise ist am vorderen Bügel und am Rahmen jeweils eine konzentrisch zur Drehachse angeordnete Scheibe angebracht, und sind die gegeneinander gerichteten Oberflächen der beiden Scheiben aufeinander gleitbar. Durch diese Ausgestaltung wird einerseits eine stabile Lagerung des steuerbaren vorderen Bügels mit den beiden Kufen bezüglich des Rahmens erreicht, andererseits können die gegeneinader gerichteten Oberflächen der beiden Scheiben einen geringen Reibungskoeffizienten aufweisen, wodurch die Lenkung leichtgängig wird.

In vorteilhafter Weise sind der vordere Bügel und die entsprechende Scheibe mit Spiel auf die am Rahmen befestigte Drehachse aufgesetzt und werden über ein Federelement gegen die Oberfläche der Scheibe des Rahmens gepresst, wodurch eine gewisse Flexibilität des vorderen Bügels bezüglich des Rahmens erreicht wird.

Eine weitere vorteilhafte Ausgestaltung der Erfindung besteht darin, dass die gegeneinander gerichteten Oberflächen der beiden Scheiben jeweils bezüglich der Drehachse eine Neigung aufweisen. Beim Verdrehen dieser geneigten Oberflächen der beiden Scheiben gegeneinander bewegen sich die Scheiben voneinander weg, einerseits ergibt dies eine Unterstützung beim zurückfahren des ausgelenkten Bügels mit den Kufen in die neutrale Position, andererseits erfolgt beim Lenken des Bügels ein Absenken der bezüglich der zu fahrenden Kurve inneren Kufe hinsichtlich der Kufen des hinteren Bügels, wodurch erreicht wird, dass die Lenkbarkeit des Schlittens verbessert wird.

Eine Ausführungsform des erfindungsgemässen Schlittens wird nachfolgend anhand der beiliegenden Zeichnung beispielhaft näher erläutert.

### Es zeigt:

Figur 1 in räumlicher Darstellung den erfindungsgemässen Schlitten mit Bremseinrichtung in nicht bremsender Position und den Rollen;
Figur 2 eine Längsschnittdarstellung des Schlittens gemäss Figur 1 mit der Bremseinrichtung in nichtbremsender Position und den Rollen in der hochgeschwenkten Position;
Figur 3 eine Ansicht auf den Schlitten, bei welchem sich der vordere Bügel mit den Kufen in einer Auslenkstellung befindet;
Figur 4 eine Draufsicht auf den Schlitten mit ausgelenkter Stellung des vorderen Bügels mit den daran befestigten Kufen;
Figur 5 eine Längsschnittdarstellung des Schlittens mit hochgeschwenkten Rollen;
Figur 6 eine Längsschnittdarstellung des Schlittens mit den Rollen in ausgeschwenkter Position;
Figur 7 eine Detailansicht einer Rolle in der hochgeschwenkten Position;
Figur 8 eine Detailansicht der Rolle in der ausgeschwenkten Position;
Figur 9 eine Schnittdarstellung der lenkbaren Lagerung des steuerbaren vorderen Bügels;
Figur 10 eine Draufsicht auf die Scheiben der Steuerung gemäss Figur 9;
Figur 11 eine Ansicht des hinteren Teils des Schlittens beim Fahren im weichen Schnee mit Bremseinrichtung in nichtbremsender Stellung und hochgeschwenkten Rollen;
Figur 12 eine Ansicht des hinteren Teils des Schlittens beim Fahren auf einer harten gleitfähigen Unterlage, der Bremseinrichtung in Bremsstellung und hochgeschwenkten Rollen;
Figur 13 eine Ansicht des hinteren Teils des Schlittens beim Fahren im weichen Schnee, der Bremseinrichtung in vollbremsendem Zustand und hochgeschwenkten Rollen;
Figur 14 eine Ansicht des hinteren Teils des Schlittens beim Fahren auf einer nicht gleitfähigen Unterlage mit ausgeschwenkten Rollen und der Bremseinrichtung im nichtbremsenden Zustand;
Figur 15 eine Ansicht des hinteren Teil des Schlittens beim Fahren auf einer nicht gleitfähigen Unterlage mit ausgeschwenkten Rollen und der Bremseinrichtung beim Bremsvorgang; und
Figur 16 eine Ansicht des hinteren Teils des Schlittens beim Fahren auf einer nicht gleitfähigen Unterlage mit ausgeschwenkten Rollen und die Bremseinrichtung im Zustand einer Vollbremsung.

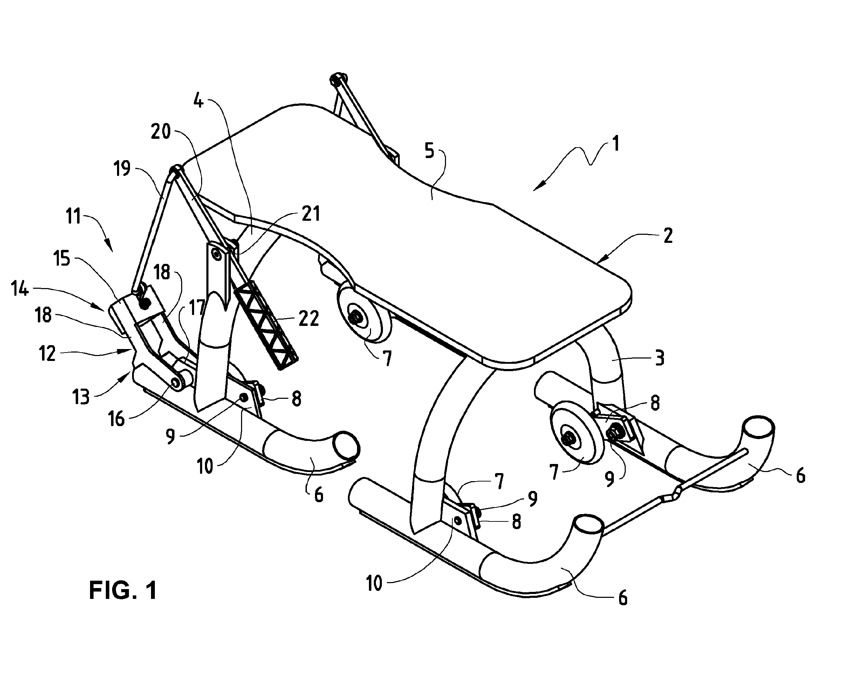

Fig. 1 zeigt in räumlicher Darstellung den erfindungsgemässen Schlitten 1. Dieser Schlitten 1 umfasst einen Rahmen 2, mit einem vorderen Bügel 3 und einem hinteren Bügel 4. Der vordere Bügel 3 und der hintere Bügel 4 sind über ein Sitzbrett 5, das den Rahmen 2 bildet, miteinander verbunden. An den vom Sitzbrett 5 abgewandten Enden des vorderen Bügels 3 und des hinteren Bügels 4 sind Kufen 6 befestigt.

Im Bereich der Kufen 6 sind Rollen 7 angebracht. Jede dieser Rollen 7 ist jeweils an einem zweiten Schwenkhebel 8 drehbar gelagert, der zweite Schwenkhebel 8 ist um eine zweite Schwenkachse 9 schwenkbar, welche zweite Schwenkachse 9 an einer Lasche 10 gehalten ist, welche an der jeweiligen Kufe 6 und dem entsprechenden Bügel 3 beziehungsweise 4 befestigt ist. Die zweiten Schwenkhebel 8 und somit die Rollen 7 können, wie später noch im Detail beschrieben wird, von einer hochgeschwenkten Position in eine ausgeschwenkte Position verschwenkt werden.

An den beiden Kufen 6, die am hinteren Bügel 4 befestigt sind, ist jeweils eine Bremseinrichtung 11 angeordnet. Jede dieser Bremseinrichtungen 11 weist ein Bremselement 12 auf, das einen ersten Bereich 13, der bei hochgeschwenkten Rollen 7 mit der Unterlage in Kontakt kommt, und einen zweiten Bereich 14 umfasst, der bei ausgeschwenkten Rollen 7 mit der Unterlage in Kontakt kommt und jeweils eine Bremswirkung erzeugt, wie später noch im Detail beschrieben wird.

Das Bremselement 12 weist einen ersten Schwenkhebel 15 auf, der um eine erste Schwenkachse 16 schwenkbar ist. Die erste Schwenkachse 16 ist an einer Platte 17 gehalten, die an der jeweiligen Kufe 6 und dem Endbereich des hinteren Bügels 4 befestigt ist. Der erste Schwenkhebel 15 ist in diesem Ausführungsbeispiel durch zwei parallel angeordnete Schenkel 18 gebildet, wobei der eine Schenkel 18 innenseitig an der Kufe 6 und der andere Schenkel 18 aussenseitig an der Kufe 6 vorbei schwenkbar ist. Die beiden Schenkel 18 sind im hinteren Endbereich miteinander verbunden. An dieser Verbindungsstelle ist am ersten Schwenkhebel 15 eine Koppelstange 19 angelenkt, welche ihrerseits mit einem Bedienerhebel 20 gelenkig verbunden ist. Der Bedienerhebel ist in einer Lagerung 21 schwenkbar gelagert, und ist für die Bedienung mit einem Handgriff 22 ausgestattet.

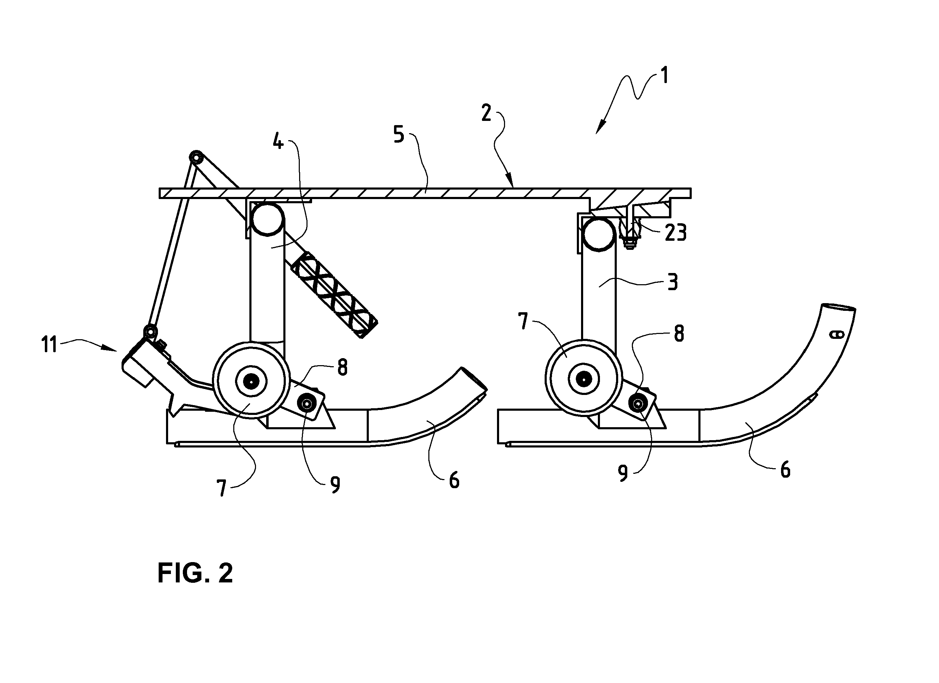

Aus Fig. 2 ist der Schlitten 1 gemäss Fig. 1 in einem Längsschnitt dargestellt. Wiederum ersichtlich ist der vordere Bügel 3 und der hintere Bügel 4, an welchen die Kufen 6 befestigt sind. Die zweiten Schwenkhebel 8 mit den daran befestigten Rollen 7 befinden sich in der hochgeschwenkten Position, das heisst, dass der Schlitten 1 in diesem Zustand auf einer gleitfähigen Unterlage, beispielsweise Schnee, gleiten kann. Die Bremseinrichtung 11 befindet sich in der nichtbremsenden Position, der Schlitten ist bereit zum Rodeln.

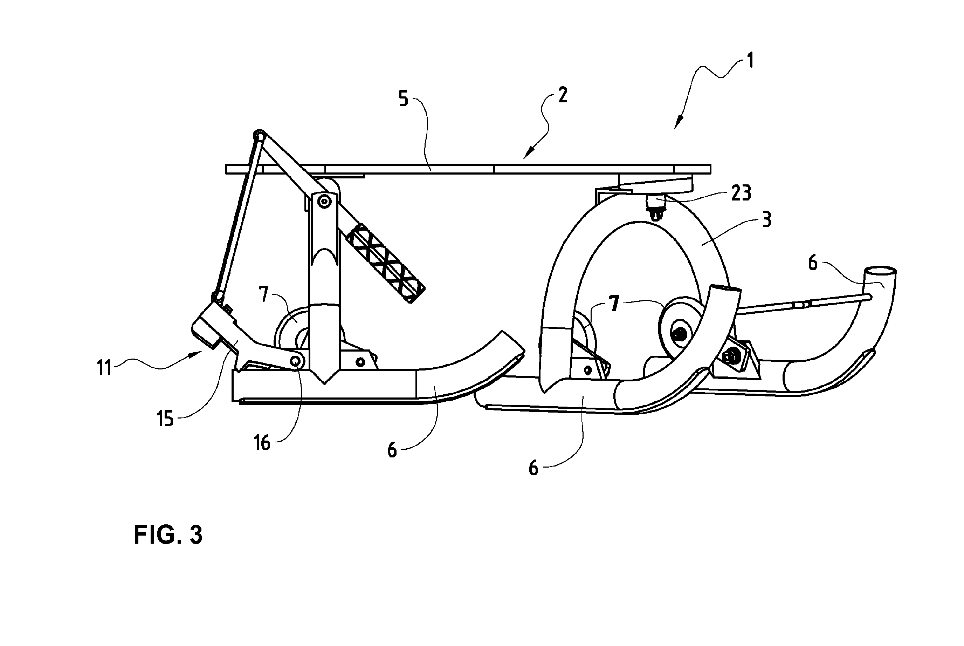

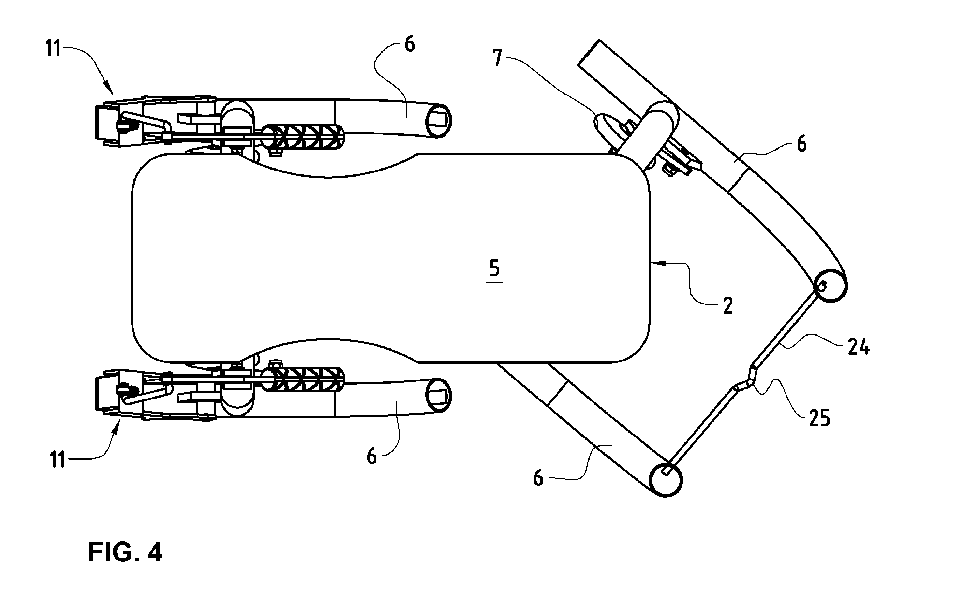

Wie ebenfalls aus Fig. 2 entnommen werden kann, ist der vordere Bügel 3 bezüglich des Rahmens 2 beziehungsweise des Sitzbrettes 5 um eine Drehachse 23 verdrehbar. Durch Verdrehen des vorderen Bügels 3 zusammen mit den Kufen 6 um diese Drehachse 23 lässt sich der Schlitten 1 lenken, wie dies insbesondere auch aus den Fig. 3 und 4 entnommen werden kann, bei welchen sich der vordere Bügel 3 zusammen mit den Kufen 6 bezüglich des Rahmens 2 beziehungsweise des Sitzbrettes 5 in einer ausgelenkten Position befindet. Das Auslenken des vorderen Bügels 3 kann durch die auf dem Schlitten 1 sitzende Person über die Beine gesteuert werden, die Füsse können auf dem vorderen Bereich der beiden Kufen 6 des vorderen Bügels 3 aufgesetzt werden, der vordere Bügel 3 lässt sich so in einfacher Weise auslenken.

Wie beispielsweise aus Fig. 4 ersichtlich ist, können die beiden vorderen Bereiche der Kufen 6 über eine Querstange 24 miteinander verbunden werden, die im mittleren Bereich mit einer Ausbiegung 25 versehen ist, an dieser Ausbiegung 25 kann beispielsweise ein Zugseil oder ein anderes Zugelement in bekannter Weise befestigt werden, wodurch der Schlitten 1 gezogen werden kann.

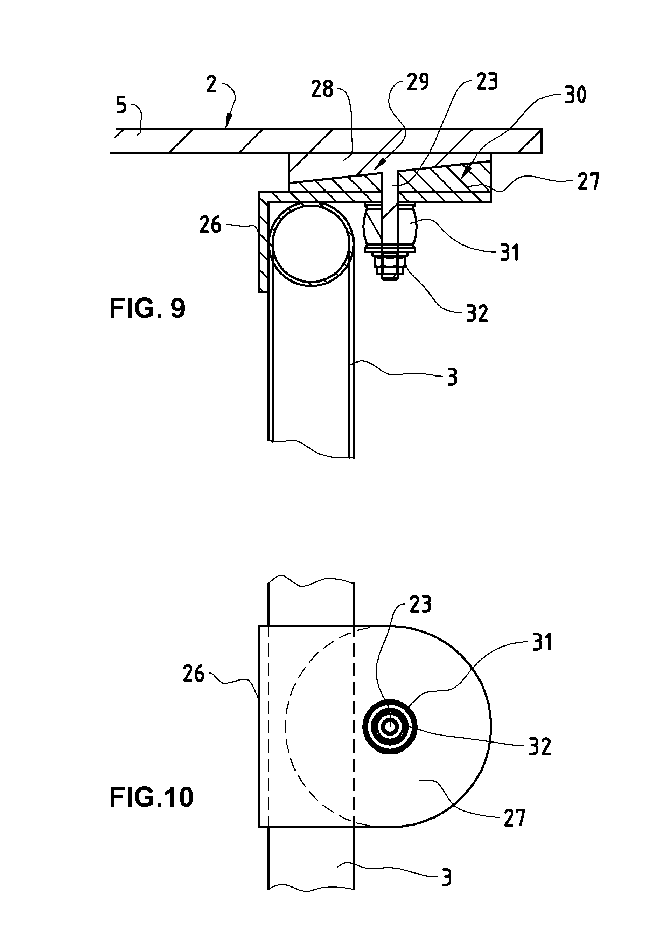

Den Fig. 9 und 10 ist der Aufbau der Lenkung für den Schlitten entnehmbar. Aus der Schnittdarstellung gemäss Fig. 9 ist entnehmbar, dass am vorderen Bügel 3 ein Tragwinkel 26 befestigt ist. Auf den Tragwinkel 26 aufgesetzt und mit diesem fest verbunden ist eine erste Scheibe 27, die kreisrund ausgebildet ist. Das Zentrum dieser ersten Scheibe 27 wird durch die Drehachse 23 durchdrungen, welche Drehachse 23 in bekannter Weise am Rahmen 2 beziehungsweise dem Sitzbrett 5 befestigt ist. Auf die Drehachse 23 ist zudem eine zweite Scheibe 28 aufgesetzt, die ebenfalls eine kreisrunde Form aufweist, die mit dem Rahmen 2 beziehungsweise dem Sitzbrett 5 fest verbunden ist. Die gegeneinander gerichteten Oberflächen 29 und 30 der entsprechenden ersten Scheibe 27 und der zweiten Scheibe 28 können somit aufeinander gleiten. Auf den über die beiden Scheiben 27 und 28 vorstehenden Teil der Drehachse 23 ist ein Federelement 31 aufgesetzt, das über ein Spannelement 32, das beispielsweise eine Schraubenmutter sein kann, die auf die entsprechend ausgestaltete Drehachse 23 aufgeschraubt werden kann, gegen die beiden Scheiben 27 und 28 gedrückt wird.

Die beiden einander zugewandten und aufeinander gleitenden Oberflächen 29 und 30 sind bezüglich der Drehachse geneigt. Die dickste Stelle der zweiten Scheibe 28 ist in Längsfahrtrichtung des Schlittens nach hinten gerichtet. Die dickste Stelle der ersten Scheibe 27 befindet sich im nicht ausgelenkten Zustand des vorderen Bügels 3, also bei Geradeausfahrt des Schlittens, über der dünnsten Stelle der zweiten Scheibe 28. Beim Auslenken des Bügels 3 zum Fahren einer Kurve mit dem Schlitten verdreht sich mit dem Bügel 3 auch die erste Scheibe 27 bezüglich der zweiten Scheibe 28, dies bedeutet, dass der Bügel 3 gegen die Innenseite der Kurve, die der Schlitten fährt, geneigt wird, was gleichbedeutend ist, dass die die Innenseite der Kurve befahrende Kufe 6 etwas gegen die Unterlage hin abgesenkt wird, der Druck dieser Kufe 6 auf die Unterlage wird dadurch grösser, was zur Folge hat, dass der Schlitten 1 besser lenkbar ist. Der Neigungswinkel der beiden Oberflächen 29 und 30 bezüglich der Drehachse 23 kann flacher oder steiler sein. Bei steilerem Neigungswinkel wird der vordere Bügel beim Lenken entsprechend mehr geneigt, was eine aggressivere Lenkung des Schlittens zur Folge hat und umgekehrt.

In bekannter Weise ist die Ausnehmung in der ersten Scheibe 27, durch welche die Drehachse 23 hindurchragt, mit Spiel ausgebildet, sodass die beim Lenken entstehenden Neigungen entsprechend aufgenommen werden können.

Durch die Neigung der Oberflächen der ersten Scheibe 27 und der zweiten Scheibe 28 und die durch das Federelement 31 ausgeübte Federkraft auf diese beiden Scheiben wird bewirkt, dass die Rückstellung des ausgelenkten vorderen Bügels 3 in die Neutralstellung unterstützt wird.

Selbstverständlich wäre es auch denkbar, dass die Neutralstellung des Bügels 3 bezüglich des Rahmens 2 beziehungsweise des Sitzbrettes 5, in welcher der Schlitten geradeaus fährt, durch eine bekannte, nicht dargestellte Arretiereinrichtung fixiert werden kann, wodurch der Schlitten nicht mehr lenkbar wäre, zum Lenken könnte diese Arretiereinrichtung in einfacher Weise gelöst werden.

Selbstverständlich könnte diese Lenkvorrichtung in irgendeinen Schlitten eingesetzt werden, der einen vorderen Bügel und einen hinteren Bügel mit entsprechend angebrachten Kufen aufweist, und der keine Bremseinrichtung und/oder keine Rollen aufweisen muss.

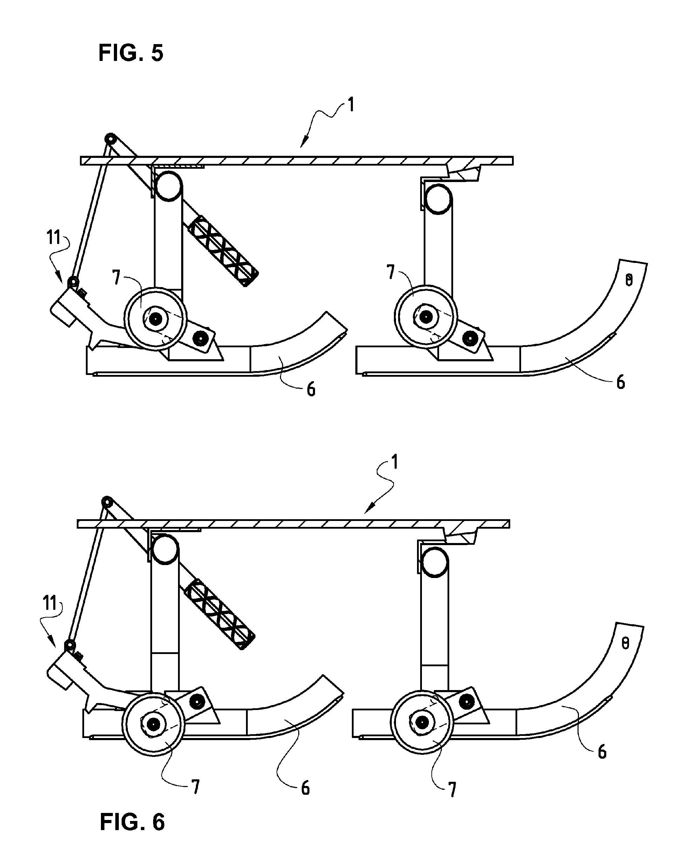

Fig. 5 zeigt den Schlitten 1 mit den Rollen 7 in der hochgeschwenkten Position. Der Schlitten 1 liegt hierbei mit den Kufen 6 auf der Unterlage auf; auf einer gleitfähigen Unterlage, beispielsweise Schnee, kann mit dem Schlitten 1 somit gerodelt werden.

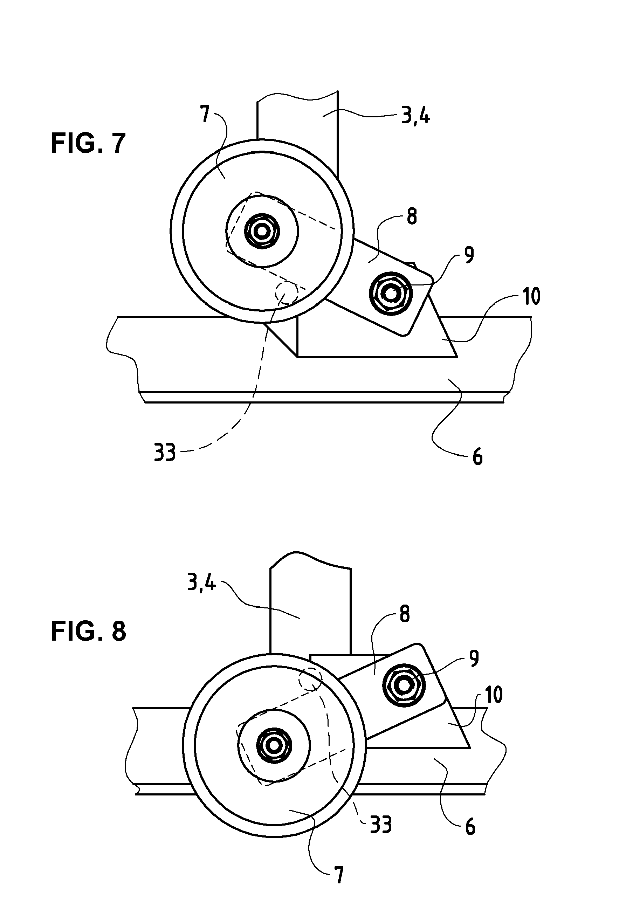

Fig. 7 zeigt im Detail die Rollen 7 in der hochgeschwenkten Position.
Hierbei wird der zweite Schwenkhebel 8 in Fig. 7 gegen den Uhrzeigersinn um die zweite Schwenkachse 9 zurückgeschwenkt, bis der zweite Schwenkhebel 8 an einem Anschlag 33 zur Anlage kommt. Dieser Anschlag 33 ist im hier dargestellten Ausführungsbeispiel als Bolzen ausgebildet, welcher beispielsweise im vorderen Bügel 3 beziehungsweise im hinteren Bügel 4 befestigt ist.

Fig. 6 zeigt den Schlitten mit Rollen, die sich in der ausgeschwenkten Position befinden. In dieser ausgeschwenkten Position stehen die Rollen 7 über die Kufen 6 vor, dadurch kann mit dem Schlitten 1 auf einer nicht gleitfähigen Unterlage gerollt werden, wobei dieser Schlitten auch im Rollzustand lenkbar ist und die Bremseinrichtung 11 vollumfänglich eingesetzt werden kann, wie nachfolgend noch im Detail beschrieben wird.

Fig. 8 zeigt eine Detailansicht einer Rolle 7 in ausgeschwenktem Zustand. Um die Rolle 7 in diese Position zu bringen, wird gemäss Fig. 8 der zweite Schwenkhebel 8 um die zweite Schwenkachse 9 im Uhrzeigersinn geschwenkt, bis der zweite Schwenkhebel 8 am Anschlag 33 wiederum zur Anlage kommt. Als Anschlag kann dasselbe Element verwendet werden, wie zum Festlegen der hochgeschwenkten Position, die in Fig. 7 ersichtlich ist.

Wenn beispielsweise mit diesem Schlitten ein Schlittelweg hinuntergerodelt wird, der mit Schnee bedeckt ist, werden die Rollen 7 in die hochgeschwenkte Position gebracht, wie dies in der Fig. 5 und Fig. 7 dargestellt ist. Wenn beispielsweise in unteren Lagen bei diesem Schlittelweg der Schnee weggeschmolzen ist, und beispielsweise die asphaltierte

Oberfläche zum Vorschein kommt, können bei diesem Schlitten die Rollen 7 in die ausgeschwenkte Position gebracht werden, wie dies in der Fig. 6 und der Fig. 8 dargestellt ist. Die Fahrt kann somit auf den Rollen 7 praktisch ungehindert fortgesetzt werden, ohne dass sich an der Fahrtechnik des Schlitten etwas ändert, der Schlitten lässt sich lenken, die Bremseinrichtung ist voll einsatzfähig.

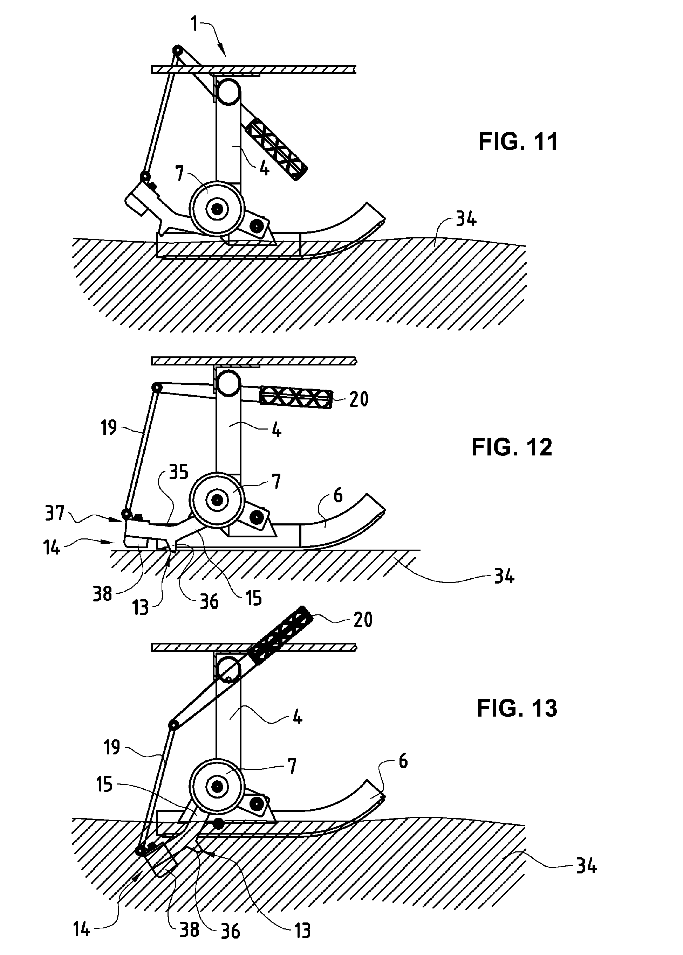

In den Fig. 11 bis 13 ist jeweils der hintere Teil des Schlittens mit dem hinteren Bügel 4 und den daran befestigten Kufen 6 dargestellt, wobei die Rollen 7 sich im hochgeschwenkten Zustand befinden. Fig. 11 zeigt den Zustand beim normalen Rodeln auf einer gleitfähigen Unterlage 34, beispielsweise Schnee. Zum Rodeln befindet sich die Bremseinrichtung 11 in der angehobenen Position.

Fig. 12 zeigt den Schlitten auf einer gleitfähigen Unterlage 34, die hart bis eisig ausgebildet ist. Wenn nun die Fahrt des Schlittens gebremst werden soll, kann durch die den Schlitten 1 benützende Person der Bedienerhebel 20 nach oben gezogen werden. Über die Koppelstange 19 wird der erste Schwenkhebel 15 gegen die Unterlage 34 geschwenkt. Der erste Schwenkhebel 15 weist einen ersten Bereich 13 auf, der mit der harten gleitfähigen Unterlage zuerst in Kontakt kommt. Dieser erste Bereich 13, der in einem mittleren Bereich 35 des ersten Schwenkhebels 15 angeordnet ist, weist beispielsweise eine Kralle 36 auf, die in die harte, gleitfähige Unterlage 34 eingreift und den Schlitten zum Stehen bringen kann. Der dem einen Schwenkbereich des Schwenkhebels 15, in welchem die ersten Schwenkachse 16 angebracht ist, gegenüberliegende andere Endbereich 37 des ersten Schwenkhebels 15 weist den zweiten Bereich 14 auf, der als Bremsklotz 38 ausgebildet ist. Dieser zweite Bereich 14 ist bezüglich des einen Bereichs des Schwenkhebels 15, in welchem die Schwenkachse 16 angebracht ist, leicht nach oben gebogen. Dadurch wird erreicht, dass der Bremsklotz 38 im oben beschriebenen Bremsvorgang nicht mit der harten, gleitfähigen Unterlage in Kontakt kommt und möglicherweise die Bremswirkung der Kralle 36 aufheben könnte.

Wenn nun, wie dies in Fig. 13 dargestellt ist, auf einer relativ weichen gleitfähigen Unterlage 34, beispielsweise im Tiefschnee, gerodelt wird und die Fahrt gebremst werden soll, kann der Bedienerhebel 20 vollständig nach oben gezogen werden, der erste Schwenkhebel 15 wird dann tief in die gleitfähige weiche Unterlage 34 hineingedrückt, sodass sowohl der erste Bereich 13 mit der Kralle 36 als auch der zweite Bereich mit dem Bremsklotz 38 tief in die weiche gleitfähige Unterlage 34 hineingedrückt werden und dadurch eine optimale Bremswirkung erreicht werden kann.

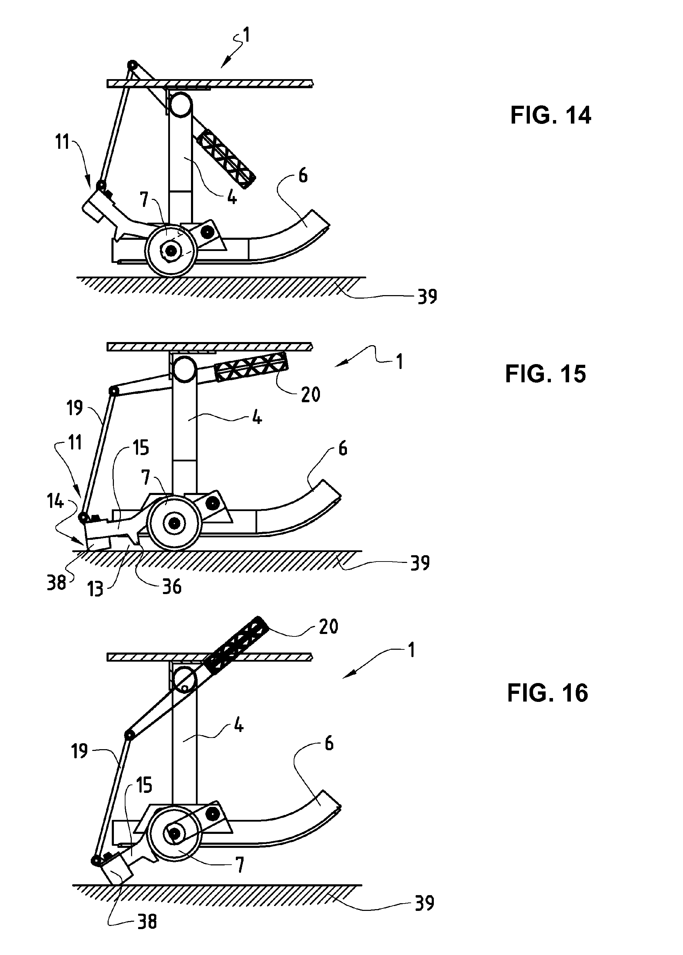

In den Fig. 14 bis 16 ist dargestellt, wie der Schlitten auf einer nicht gleitfähigen Unterlage 39 eingesetzt werden kann. In diesen Fig. 14 bis 16 ist wiederum der hintere Teil des Schlitten 1 mit dem hinteren Bügel 4 und der daran angeordneten Kufe 6 dargestellt. Die Rollen 7 befinden sich in der ausgeschwenkten Position, das heisst, die Kufen 6 kommen nicht in Kontakt mit der nicht gleitfähigen Unterlage 39.

Fig. 14 zeigt den Schlitten für eine freie Fahrt, die Bremseinrichtung 11 befindet sich in der angehobenen Position.

Wenn nun die Fahrt des Schlittens 1 gebremst werden soll, kann die auf dem Schlitten fahrende Person den Bedienerhebel 20 hochziehen, über die Koppelstange 19 wird der erste Schwenkhebel 15 gegen die nicht gleitfähige Unterlage 39 geschwenkt, der Bremsklotz 38 wird gegen die nicht gleitfähige Unterlage 39 gedrückt, die Fahrt des Schlittens wird gebremst. Wie aus Fig. 15 ersichtlich ist, kommt der erste Bereich 13 mit der Kralle 36 nicht in Kontakt mit der nicht gleitfähigen Unterlage 39, vielmehr gelangt der zweite Bereich 14 mit dem Bremsklotz 38 in Kontakt mit der nicht gleitfähigen Unterlage 39 und übt die entsprechende Bremswirkung aus, die nicht gleitfähige Unterlage wird dadurch nicht durch die Kralle 36 beschädigt. Der Bremsklotz 38 weist in vorteilhafter Weise einen aus beispielsweise Kunststoff gefertigten Bremskörper auf, der sich nicht zu schnell abnützt. Dieser Bremsklotz kann so am ersten Schwenkhebel 15 befestigt sein, dass dieser in bekannter, nicht dargestellter Weise auf eine einfache Art ausgetauscht werden kann.

Bei einer starken Bremsung oder Vollbremsung kann, wie dies in Fig. 16 dargestellt ist, der Bedienerhebel 20 noch weiter angehoben werden, der erste Schwenkhebel 15 wird dann über die Koppelstange noch weiter gegen die nicht gleitfähige Unterlage 39 ausgeschwenkt, der hintere Teil des Schlittens kann dadurch so weit angehoben werden, dass die Rolle 7 nicht mehr auf der nicht gleitfähigen Unterlage 39 aufliegt, sondern sich das ganze Gewicht auf dem Bremsklotz 38 abstützt, wodurch die optimalste Bremswirkung erreicht werden kann.

Der erste Bereich 13 mit der Kralle 36 und der zweite Bereich 14 mit dem Bremsklotz 38 könnten auch so ausgebildet werden, dass der Bremsklotz 38 auf der einen Seite, wie vorgängig beschrieben worden ist, den aus Kunststoff bestehenden Bremskörper aufweist, die gegenüberliegende Seite aber mit mindestens einer Kralle versehen ist. Der Bremsklotz 38 könnte dann drehbar im ersten Schwenkhebel 15 angebracht sein, bei hochgeschwenkten Rollen 7 würde man den Bremsklotz 38 im ersten Schwenkhebel 15 so drehen und entsprechend fixieren, dass die Kralle gegen die Unterlage gerichtet ist und beim Bremsen wirksam wird, bei ausgeschwenkten Rollen 7 würde man den Bremsklotz 38 im ersten Schwenkhebel 15 so drehen und entsprechend fixieren, dass der Bremskörper gegen die Unterlage gerichtet ist und beim Bremsen wirksam wird.

Mit diesem erfindungsgemässen Schlitten kann sowohl auf einer gleitfähigen Unterlage wie Schnee oder Eis auf die übliche Art gerodelt werden, der Schlitten ist in einfacher Weise lenkbar, mit diesem Schlitten können aber auch nicht gleitfähige Unterlagen überfahren werden, wobei auch bei diesem Vorgang der Schlitten lenkbar ist, in jeder Art des Rodelns oder Fahrens kann der Schlitten in optimaler Weise gebremst werden, was ein sicheres Fahren in jeder Situation ermöglicht.

## Patentansprüche

1. Schlitten zum Rodeln auf einer Unterlage, umfassend einen Rahmen (2) mit mindestens einem vorderen Bügel (3) und einem hinteren Bügel (4), an welchen Kufen (6) befestigt sind, ein am Rahmen (2) befestigtes Sitzbrett (5), Rollen (7), die beim Rodeln auf einer gleitfähigen Unterlage (34) in eine hochgeschwenkte Position bringbar sind und zum Fahren auf einer nicht gleitfähigen Unterlage (39) in eine ausgeschwenkte Position bringbar sind, und eine Bremseinrichtung (11), **dadurch gekennzeichnet, dass** die Bremseinrichtung (11) mindestens ein Bremselement (12) umfasst, welches über eine Betätigungseinrichtung (19, 20) zum Bremsen des Schlittens (1) gegen die Unterlage (34; 39) ausfahrbar ist, und dass das Bremselement (12) einen ersten Bereich (13), der bei hoch geschwenkten Rädern (7) mit der gleitfähigen Unterlage (34) in Kontakt kommt, und einen zweiten Bereich (14) aufweist, der bei ausgeschwenkten Rädern (7) mit der nicht gleitfähigen Unterlage (39) in Kontakt kommt und jeweils eine Bremswirkung erzeugt.

2. Schlitten zum Rodeln auf einer Unterlage nach Anspruch 1,
**dadurch gekennzeichnet, dass** das Bremselement (12) durch einen ersten Schwenkhebel (15) gebildet ist, der über eine erste Schwenkachse (16) schwenkbar mit dem Rahmen (2) verbunden ist.

3. Schlitten zum Rodeln auf einer Unterlage nach Anspruch 2,
**dadurch gekennzeichnet, dass** der eine Endbereich des ersten Schwenkhebels (15) um die erste Schwenkachse (16) schwenkbar angeordnet ist und dass der erste Bereich (13) und der zweite Bereich (14) des Bremselements (12) am schwenkbaren Bereich des ersten Schwenkhebels (15) angeordnet sind.

4. Schlitten zum Rodeln auf einer Unterlage nach Anspruch 2 oder 3, **dadurch gekennzeichnet, dass** der erste Bereich (13) des Bremselements (12) in einem mittleren Bereich (35) des schwenkbaren Bereichs des ersten Schwenkhebels (15) angeordnet ist und mindestens eine Kralle (36) umfasst, die über den ersten Schwenkhebel (15) vorstehend und gegen die Unterlage gerichtet ist.

5. Schlitten zum Rodeln auf einer Unterlage nach einem der Ansprüche 2 bis 4, **dadurch gekennzeichnet, dass** der zweite Bereich (14) des Bremselements (12) am dem einen Endbereich des ersten Schwenkhebels gegenüberliegenden anderen Endbereich (37) angebracht ist und als Bremsklotz (38) ausgebildet ist und dass der andere Endbereich (37) bezüglich des einen Endbereichs im mittleren Bereich (35) abgebogen ist.

6. Schlitten zum Rodeln auf einer Unterlage nach einem der Ansprüche 2 bis 5, **dadurch gekennzeichnet, dass** die Betätigungseinrichtung einen im Bereich der Sitzfläche am Rahmen (2) angebrachten Bedienerhebel (20) umfasst, welcher über eine Koppelstange (19) mit dem ersten Schwenkhebel (15) verbunden ist und der erste Schwenkhebel (15) über ein Federelement in die aus der Bremsposition zurückgezogene Position bringbar ist.

7. Schlitten zum Rodeln auf einer Unterlage nach einem der Ansprüche 2 bis 6, **dadurch gekennzeichnet, dass** der erste Schwenkhebel (15) aus zwei parallelen Schenkeln (18) gebildet ist, die beidseits einer Kufe (6) angeordnet sind, deren andere Endbereiche über das Kufenende vorstehend sind und über den Bremsklotz (38) miteinander verbunden sind.

8. Schlitten zum Rodeln auf einer Unterlage nach einem der Ansprüche 1 bis 7, **dadurch gekennzeichnet, dass** im Bereich beider hinteren Kufen (6) jeweils eine Bremseinrichtung (11) angebracht ist.

9. Schlitten zum Rodeln auf einer Unterlage nach Anspruch 8,
**dadurch gekennzeichnet, dass** jede Bremseinrichtung (11) separat über jeweils einen Bedienerhebel (20) betätigbar ist.

10. Schlitten zum Rodeln auf einer Unterlage nach einem der Ansprüche 1 bis 9, **dadurch gekennzeichnet, dass** an jeder Kufe (6) eine Rolle (7) angebracht ist, welche an jeweils einem zweiten Schwenkhebel (8) drehbar gelagert ist, welcher zweite Schwenkhebel (8) um eine am Rahmen (2) bzw. an der Kufe (6) gehaltenen zweiten Schwenkachse (9) schwenkbar ist.

11. Schlitten zum Rodeln auf einer Unterlage nach Anspruch 10,
**dadurch gekennzeichnet, dass** die eingeschwenkte Position des zweiten Schwenkhebels (8) der Rolle (7) und die ausgeschwenkte Position des zweiten Schwenkhebels (8) der Rolle (7) durch einen Anschlag (33) begrenzt sind.

12. Schlitten zum Rodeln auf einer Unterlage nach einem der Ansprüche 1 bis 11, **dadurch gekennzeichnet, dass** der vordere Bügel (3) mit dem Rahmen (2) über eine Drehachse (23) drehbar verbunden ist.

13. Schlitten zum Rodeln auf einer Unterlage nach Anspruch 12,
**dadurch gekennzeichnet, dass** am vorderen Bügel (3) und am Rahmen (2) jeweils eine konzentrisch zur Drehachse (23) angeordnete Scheibe (27 bzw. 28) angebracht ist, und die gegeneinander gerichteten Oberflächen (29, 30) der beiden Scheiben (27, 28) aufeinander gleitbar sind.

14. Schlitten zum Rodeln auf einer Unterlage nach Anspruch 13,
**dadurch gekennzeichnet, dass** der vordere Bügel (3) und die entsprechende Scheibe (27) mit Spiel auf die am Rahmen (2) befestigte Drehachse (23) aufgesetzt sind und über ein Federelement (31) gegen die Oberfläche (30) der Scheibe (28) des Rahmens (2) gepresst werden.

15. Schlitten zum Rodeln auf einer Unterlage nach Anspruch 13 oder 14, **dadurch gekennzeichnet, dass** die gegeneinander gerichteten Oberflächen (29, 30) der beiden Scheiben (27, 28) jeweils bezüglich der Drehachse (23) eine Neigung aufweisen.
